# EUROPÄISCHE PATENTSCHRIFT

(11) **EP 3 017 175 B1**
(45) Veröffentlichungstag und Bekanntmachung des Hinweises auf die Patenterteilung: **25.04.2018**
(21) Anmeldenummer: 14722205.3
(22) Anmeldetag: 07.05.2014
(51) Int. Cl.: H02K 5/10, H02K 11/33, F02M 26/54, F02M 26/72, H02K 5/14, H02K 5/173, H02K 7/116

(54) **AKTOR ZUM ANTRIEB EINER VENTILEINHEIT EINER VERBRENNUNGSKRAFTMASCHINE**
ACTUATOR FOR DRIVING A VALVE UNIT OF AN INTERNAL COMBUSTION ENGINE
ACTIONNEUR PERMETTANT D'ENTRAÎNER UN ENSEMBLE SOUPAPE D'UN MOTEUR À COMBUSTION INTERNE

(30) Priorität: 05.07.2013 DE 102013107111
(43) Veröffentlichungstag der Anmeldung: 11.05.2016
(73) Patentinhaber: Pierburg GmbH, 41460 Neuss (DE)
(72) Erfinder: ZILL, Mathias, 01683 Nossen (DE); LINDNER, Enrico, 09322 Penig (DE); SIMONS, Norbert, 40233 Düsseldorf (DE)
(74) Vertreter: Patentanwälte ter Smitten Eberlein-Van Hoof Rütten Partnerschaftsgesellschaft mbB
(86) Internationale Anmeldenummer: PCT/EP2014/059317
(87) Internationale Veröffentlichungsnummer: WO 2015/000617

(56) Entgegenhaltungen:
- EP-A1- 1 293 662
- EP-A1- 2 426 343
- EP-A2- 1 126 156
- DE-A1- 10 024 426
- DE-A1-102008 052 313
- DE-A1-102008 053 573
- JP-A- 2012 035 665
- US-A1- 2012 193 562

## Beschreibung

Die Erfindung betrifft einen Aktor zum Antrieb einer Ventileinheit einer Verbrennungskraftmaschine mit einem Elektromotor, einem Getriebe, welches vom Elektromotor angetrieben ist, einem Getriebegehäuse, in dem das Getriebe angeordnet ist, wobei das Getriebegehäuse ein erstes Getriebegehäuseteil aufweist, aus dem ein Abtriebsglied des Aktors ragt.

Derartige Aktoren werden beispielsweise zum Antrieb von Abgasrückführventilen in Verbrennungsmotoren eingesetzt. Der Anteil solcher elektromotorischer Antriebe mit angeschlossenen Untersetzungsgetrieben hat sich in den letzten Jahren aufgrund ihrer sehr genauen Einstellmöglichkeiten und ihres zuverlässigen Betriebes stetig erhöht. Als Elektromotoren können dabei sowohl Bürstenmotoren als auch elektronisch kommutierte Motoren verwendet werden. Die Getriebe können als Planetengetriebe oder Stirnradgetriebe ausgeführt werden. Bekannt sind auch Getriebe, bei denen über einen Exzenter, eine Kulisse und ein in der Kulisse bewegbares Lager eine Ventilstange des Ventils betätigt wird.

Zur Kostenreduktion wird dabei zumeist ein kostengünstiger Elektromotor an das Getriebegehäuse angeflanscht, Eine derartige Ausführung ist beispielsweise aus der EP 0 887 540 A1 bekannt. Diese offenbart ein Abgasrückführventil mit einem in einem Getriebegehäuse ausgebildeten Getriebe, welches von einem Elektromotor angetrieben wird, der durch eine Öffnung im Getriebegehäusedeckel in den Getriebeinnenraum ragt und in einem Motorgehäuse angeordnet ist, welches über einen Flansch am Getriebegehäusedeckel befestigt wird.

In den letzten Jahren ist, durch die insbesondere aufgrund von verschärften Abgasnormen zusätzlich im Motorraum anzuordnenden Bauteile, der zur Verfügung stehende Bauraum stetig eingeschränkt worden. Aus diesem Grund wurden Stellantriebe entwickelt, welche einen geringeren Bauraum aufweisen.

Um dies zu erreichen, wird in der EP 2 177 801 A1 ein Stellantrieb für ein Abgasrückführventil vorgeschlagen, bei dem die Bürstenbrücke bildende Platte des Elektromotors in eine Öffnung des Getriebegehäuses geschoben wird und eine Befestigung dieser Platte durch Anschrauben des Motorgehäuses an das Getriebegehäuse erfolgt. Hierzu weist die Platte einen Vorsprung auf, der in das Motorgehäuse ragt, um eine Zentrierung zu erreichen. Das A-Lager des Elektromotors wird zwischen der Platte und dem Sonnenrad und dem Hohlrad des folgenden Planetengetriebes angeordnet. Auf diese Weise wird der benötigte axiale Bauraum zwar verringert, jedoch ergibt sich eine schwierige Montage. Auch ist diese Form der Lagerung nur bei einem nachfolgenden Planetengetriebe durchführbar. Des Weiteren besteht eine hohe Empfindlichkeit der Lagerung des Elektromotors bei auftretenden Vibrationen.

Des Weiteren ist aus der DE 10 2008 053 573 A1 ein Stellantrieb bekannt, bei dem am Getriebegehäuse, aus dem die Abtriebswelle ragt, das Motorgehäuse befestigt ist. Innerhalb des Getriebegehäuses ist eine Bürstenbrücke angeordnet, die ein Lager des Elektromotors aufnimmt und an dem ein Hohlrad des Planetengetriebes ausgebildet ist. Auch dieser Stellantrieb ist gegen Vibrationen empfindlich.

Auch ist aus der US 2012/0193562 A1 ein Abgasrückführventil bekannt, welches über einen Elektromotor sowie ein zwischengeschaltetes Getriebe angetrieben wird. Der Elektromotor ist an einem Getriebegehäusedeckel des Getriebegehäuses befestigt. Die Befestigung der Motorlagerung wird nicht offenbart,

Des Weiteren ist aus der DE 10 2008 052 313 A1 ein Außenläufermotor bekannt, bei dem ein inneres Gehäuse, welches den Stator trägt an dem Ende, an dem die Antriebswelle aus dem Gehäuse ragt, sich plattenförmig erweiternd ausgebildet ist. Beide Lager des Elektromotors sind in dem inneren Gehäuse angeordnet, wobei das Lager, welches an der zur plattenförmigen Erweiterung entgegengesetzten Ende angeordnet ist, über ein Federelement in Richtung der plattenförmigen Erweiterung vorgespannt ist.

Es stellt sich daher die Aufgabe, einen Aktor für eine Ventileinheit zu schaffen, der einerseits einen geringen Bauraum benötigt und andererseits einfach zu montieren ist, insbesondere eine Vormontage der einzelnen Elemente möglich sein soll, wobei die Bauteileanzahl minimiert und eine lange Lebensdauer des Elektromotors erreicht werden sollen. Eine Kombination mit beliebigen nachfolgenden Getrieben soll möglich sein.

Diese Aufgabe wird durch einen Aktor zum Antrieb einer Ventileinheit einer Verbrennungskraftmaschine mit den Merkmalen des Hauptanspruchs 1 gelöst.

Dadurch, dass das Getriebegehäuse einen Getriebegehäusedeckel aufweist, an dem der Elektromotor befestigt ist und in dem ein Lager des Elektromotors axial und radial befestigt ist, wobei das Lager durch ein am Getriebegehäusedeckel befestigtes Klemmelement axial fixiert ist, durch welches das Lager axial in Richtung des Elektromotors federbelastet ist, wobei eine zum geschlossenen Getriebegehäuse abgewandte Seite des Getriebegehäusedeckels als Bürstenbrücke des Elektromotors dient, wird es einerseits möglich die gesamte Motoreinheit vorzumontieren und am Getriebegehäuse zu befestigen und andererseits diese Einheit mit beliebigen nachfolgenden Getrieben zu verbinden. Dabei wird aufgrund der Anordnung des Lagers im Getriebegehäusedeckel und somit der Integration des Elektromotors an das Getriebegehäuse ein sehr geringer Bauraum benötigt. Durch das Klemmelement entsteht somit eine vollständige Befestigung des Lagers, welche unabhängig vom folgenden Getriebe ist. Der Getriebegehäusedeckel kann somit mit dem Elektromotor vollständig vormontiert werden, so dass bezüglich des folgenden Getriebes auch mit deutlich größeren Montagetoleranzen gefertigt werden kann. Durch die Federbelastung des Lagers ist ein leichtes axiales Schwingen des Rotors möglich, ohne dass ein Lösen aufgrund von Vibrationen zu befürchten ist, So kann, ohne zusatzliche Bauteile zur Vibrationsdämpfung verwenden zu müssen, eine erhöhte Lebensdauer des Elektromotors sichergestellt werden. Bei Verwendung eines Wälzlagers wird dessen äußerer Ring durch das federnde Klemmelement gehalten. Zusätzlich muss keine zusätzliche Bürstenbrücke montiert werden, da der Getriebegehäusedeckel auch diese Funktion erfüllt.

In einer besonders bevorzugten Ausführungsform weist das Klemmelement einen Ring auf, durch den die Antriebswelle des Elektromotors in das Getriebegehäuse ragt und von dem aus sich in Richtung des Elektromotors zumindest zwei Arme axial durch den Getriebegehäusedeckel erstrecken. So kann eine einfache Fixierung des Lagers am Getriebegehäusedeckel durch Formschluss hergestellt werden, was die Montage erleichtert. Gleichzeitig wird eine umlaufende gleichmäßige Belastung des Lagers sichergestellt, was dessen Lebensdauer erhöht.

In einer hierzu weiterführenden Ausführung sind die Arme des Klemmelementes zur axialen Fixierung des Klemmelementes an der zum Elektromotor weisenden Seite des Getriebegehäusedeckels abgewinkelt ausgebildet und liegen gegen den Getriebegehäusedeckel an. Entsprechend kann die Befestigung durch einfaches Einstecken und Umklappen der Arme an der gegenüberliegenden Seite des Getriebegehäusedeckels erfolgen.

Vorzugsweise ist zusätzlich im Getriebegehäusedeckel eine Aufnahme ausgebildet, in der das Lager angeordnet ist und deren Begrenzungswände das Lager radial und in Richtung eines Rotors des Elektromotors axial fixieren. In Kombination mit dem Klemmelement wird so eine vollständige Befestigung des Lagers erreicht, die unabhängig von den anzuschließenden Getriebeteilen ist.

Entsprechend ist an der als Bürstenbrücke dienenden Seite des Getriebegehäusedeckels eine Aufnahmeöffnung ausgebildet, in der Federn und Bürstenhalter von Kohlebürsten der Bürstenbrücke befestigt sind. So wird eine besonders einfache Befestigung der Kohlebürsten hergestellt und gleichzeitig aufgrund der Verwendung des Getriebegehäusedeckels als Halterung für das Lager eine optimierte Lage des Kommutators des Elektromotors zu den Bürsten sichergestellt. Dies führt zusätzlich zu einer Bauraumreduzierung.

In einer wiederum weiterführenden bevorzugten Ausführung sind zusätzlich an der zum Innern des Getriebegehäuses gewandten Seite des Getriebegehäusedeckels Taschen ausgebildet, in denen Entstörmittel des Elektromotors angeordnet sind. So nimmt der Getriebegehäusedeckel eine zusätzliche Funktion wahr, wodurch die Anzahl an benötigten Bauteilen weiter reduziert wird. Des Weiteren wird eine optimale Lage der Entstörbauteile zum Elektromotor sichergestellt.

Vorzugsweise sind im Getriebegehäusedeckel metallische Leitungen angeordnet, über die die Entstörmittel miteinander und mit einer Steuerplatine verbunden sind. Dies kann beispielsweise durch Umspritzen von als Stanzteilen ausgebildeten Leitungen erfolgen. Der elektrische Anschluss kann somit vollständig innerhalb des Getriebegehäusedeckels vollzogen werden, was wiederum den Herstellungsaufwand minimiert.

In einer weiteren vorteilhaften Ausführung ist die Steuerplatine im Innern des Getriebegehäuses auf dem Getriebegehäusedeckel befestigt, so dass auch die zur Ansteuerung notwendige Elektronik vollständig im Getriebegehäusedeckel integriert ist.

Um eine vollständige Integration aller elektrischen Bauteile zu vollziehen, ist ein Stecker zur Spannungsversorgung des Elektromotors ebenfalls am Getriebegehäusedeckel ausgebildet. Eine elektrische Kontaktierung über zwei oder mehr Gehäuseteile ist somit nicht erforderlich. Dies minimiert den Aufwand bei der Montage des Aktors und verhindert zuverlässig Kontaktierungsfehler,

Es wird somit ein Aktor zum Antrieb einer Ventileinheit einer Verbrennungskraftmaschine geschaffen, dessen benötigter Bauraum minimiert ist und der zusätzlich sowohl mechanisch als auch elektrisch einfach und kostengünstig montiert werden kann. Dabei wird die Anzahl der benötigten Bauteile minimiert und eine Vormontage sowohl der Motoreinheit mit dem Getriebegehäusedeckel als auch des Getriebes im Getriebegehäuse ermöglicht.

Ein Ausführungsbeispiel eines erfindungsgemäßen Aktors ist in den Figuren dargestellt und wird nachfolgend beispielhaft anhand einer Verwendung zum Antrieb eines Abgasrückführventils beschrieben.
Figur 1 zeigt eine Seitenansicht eines Abgasrückführventils mit erfindungsgemäßem Aktor in perspektivischer Darstellung und teilweise aufgeschnittenem Getriebegehäuse.

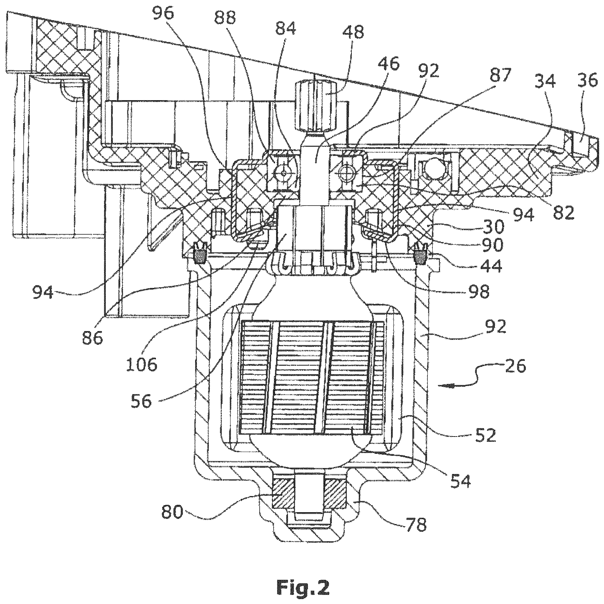

Figur 2 zeigt eine Seitenansicht des erfindungsgemäßen Aktors in geschnittener Darstellung ohne das nachfolgende Getriebe.
Figur 3 zeigt den Getriebegehäusedeckel des erfindungsgemäßen Aktors aus Figur 2 in perspektivischer Darstellung von der Seite des Elektromotors aus betrachtet.
Figur 4 zeigt den Getriebegehäusedeckel des erfindungsgemäßen Aktors aus Figur 2 in perspektivischer Darstellung von der zum Elektromotor entgegen gesetzten Seite aus betrachtet.

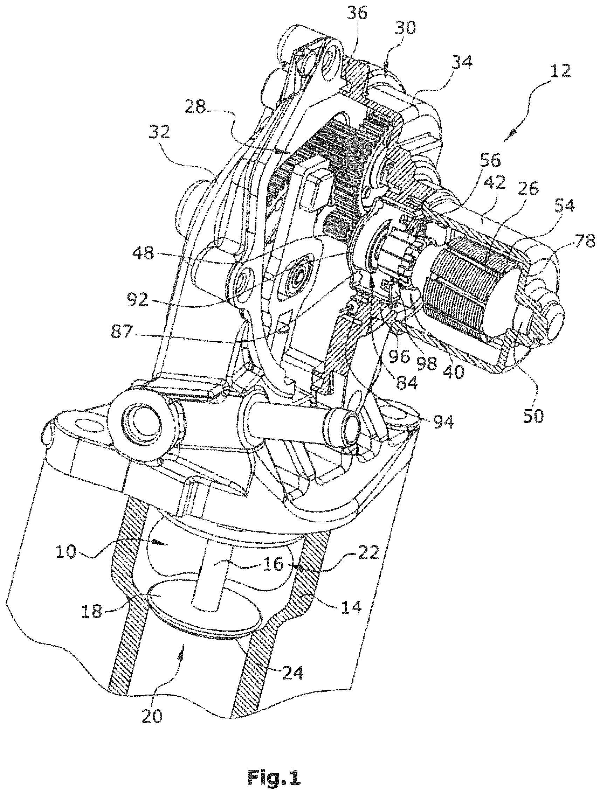

Das in der Figur 1 dargestellte Abgasrückführventil besteht aus einer Ventileinheit 10 sowie einem erfindungsgemäßen Aktor 12, über den die Ventileinheit 10 betätigt wird.

Die Ventileinheit 10 weist ein Ventilgehäuse 14 auf, in dem eine als Abtriebsglied 16 dienende Ventilstange mit einem an der Ventilstange befestigten Ventilschließkörper 18 bei Betätigung des Aktors 12 translatorisch bewegt wird. Zur Regelung des Durchströmungsquerschnitts von einem Einlass 20 zu einem Auslass 22 ist am Ventilgehäuse 14 ein Ventilsitz 24 ausgebildet, auf den der Ventilschließkörper 18 in bekannter Weise absenkbar oder von dem der Ventilschließkörper 18 abhebbar ist.

Der Aktor 12 besteht aus einem Elektromotor 26, der mit einem Getriebe 28 gekoppelt ist, über welches die rotatorische Bewegung des Elektromotors 26 in eine translatorische Bewegung des ebenfalls mit dem Getriebe 28 gekoppelten Abtriebsgliedes 16 umgewandelt wird. Das Abtriebsglied 16 ragt in ein Getriebegehäuse 30 des Aktors 12, welches am Ventilgehäuse 14 befestigt ist und in dem das Getriebe 28 angeordnet ist.

Das Getriebegehäuse 30 ist zweiteilig ausgebildet und besteht aus einem ersten einseitig offenen Getriebegehäuseteil 32, dass an dem Ventilgehäuse 14 befestigt ist und einem Getriebegehäusedeckel 34, welcher diese offene Seite des Getriebegehäuseteils 32 verschließt, indem er unter Zwischenlage einer Dichtung 36 am Getriebegehäuseteil 32 festgeschraubt wird.

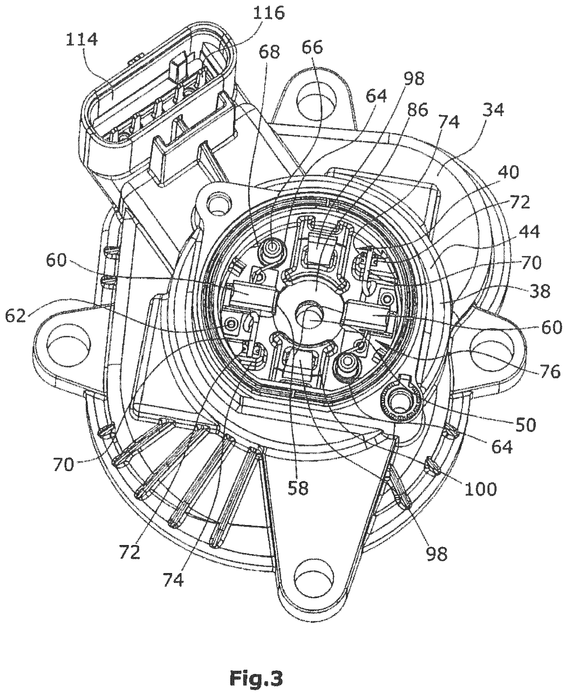

Erfindungsgemäß erfüllt der Getriebegehäusedeckel 32 mehrere Funktionen. Hierzu weist der Getriebegehäusedeckel 32, wie in Figur 3 zu erkennen ist, an seiner ersten, vom ersten Getriebegehäuseteil 32 abgewandten Seite einen flanschförmigen Vorsprung 38 auf, in dessen Innern eine Aufnahmeöffnung 40 gebildet wird. Der flanschförmige Vorsprung 38 dient zur Befestigung eines Polrohres 42 des Elektromotors 26 unter Zwischenlage einer Dichtung 44, was zu einer deutlichen verbesserten Wärmeabfuhr aus dem Elektromotor 26 führt, da kein separates Motorgehäuse verwendet werden muss. Die Anordnung des Elektromotors 26 erfolgt derart, dass der Elektromotor 26 mit seiner Antriebswelle 46 mit dem darauf befestigten Antriebsritzel 48 durch eine zentral in der Aufnahmeöffnung 40 angeordnete Bohrung 50 in das Getriebegehäuse 30 ragt.

Der Elektromotor 26 weist einen am Polrohr 42 befestigten Stator 52 auf, der in bekannter Weise mit einem auf der Antriebswelle 46 befestigten Rotor 54, auf dem in den Figuren nicht sichtbare Wicklungen angeordnet sind, zusammenwirkt. Zur Stromversorgung der Wicklungen des Rotors 54 ist auf der Antriebswelle 46 ein Kommutator 56 angeordnet, der über Kohlebürsten 58 mit Strom versorgt wird. Diese Kohlebürsten 58 sind in Bürstenhaltern 60 verschieblich angeordnet, welche in der Aufnahmeöffnung 40 des Getriebegehäusedeckels 34 über Schrauben 62 befestigt sind, Die radial nach innen gerichtete Belastung der Kohlebürsten 58 in den Bürstenhaltern 60 wird über Federn 64 erzeugt, welche um entsprechende in der Aufnahmeöffnung 40 ausgebildete zylindrische Vorsprünge 66 gewickelt sind und deren Schenkel 68 gegen die Wand des Vorsprungs 38 und die Kohlebürsten 58 vorgespannt anliegen. Die elektrische Kontaktierung der Kohlebürsten 58 erfolgt über Drähte 70, welche über Klemmkontakte 72, die an den Enden von elektrischen Leitungen 74 ausgebildet sind, welche als Stanzbleche ausgeführt und vom Kunststoff des Getriebegehäusedeckels 34 umspritzt sind, wobei die Klemmkontakte 72 in der Aufnahmeöffnung 40 aus dem Kunststoff herausragen. Entsprechend wirkt der Getriebegehäusedeckel 34 gleichzeitig als Bürstenbrücke 76.

Die Lagerung des Elektromotors 26 erfolgt an einer Seite in einer topfförmigen Aufnahme 78 am Ende des Polrohrs 42, in der ein Gleit- oder Wälzlager 80 aufgenommen wird und an der entgegengesetzten Seite über ein als Kugellager ausgeführtes Lager 82, welches in einer Aufnahme 84 angeordnet ist, die an der zum Innern des Getriebegehäuses 30 weisenden Seite des Getriebegehäusedeckels 34. Diese Aufnahme 84 ist koaxial zur Bohrung 50 und zur Aufnahmeöffnung 40 angeordnet, so dass die Aufnahme 84 lediglich durch eine Zwischenwand 86 von der Aufnahmeöffnung 40 getrennt ist. Gegen diese Zwischenwand 86 liegt das die Antriebswelle 46 umgebende Lager 82 axial an. Die radialen Begrenzungswände 87 der Aufnahme 84 fixieren das Lager 82 in radialer Richtung.

Um ein Lösen des Rotors 54 des Elektromotors 26 und ein Lösen des Lagers 82 durch Vibrationen in axialer Richtung zu verhindern, wird das Lager 82 beziehungsweise ein Außenring 88 des Kugellagers 82 über ein Klemmelement 90 in Richtung des Elektromotors 26 vorgespannt. Das Klemmelement 90 besteht hierzu aus einem Ring 92, von dessen Außenumfang sich zwei Arme 94 in axialer Richtung erstrecken. Während der Ring 92 gegen den Außenring 88 des Kugellagers 82 anliegt, ragen die Arme 94 durch entsprechend geformte axial verlaufende Löcher 96 im Getriebegehäusedeckel 34 und in die Aufnahmeöffnung 40. Die axial über den Getriebegehäusedeckel 34 ragenden Enden 98 der Arme 94 werden nach innen gegen eine axial begrenzende Wand 100 der Aufnahmeöffnung 40, an der auch die Bürstenhalter 60 befestigt sind, umgebogen. Die axialen Abstände zwischen den Lagern 80, 82 und deren Anlageflächen an der topförmigen Aufnahme 78 und am Ring 92 des Klemmelementes 90 werden so gewählt, dass beim Aufschieben und Befestigen des Polrohrs 42 eine federnde Verspannung der Lagereinheit 80, 82 erfolgt, die zu einer Unempfindlichkeit gegen Vibrationen führt.

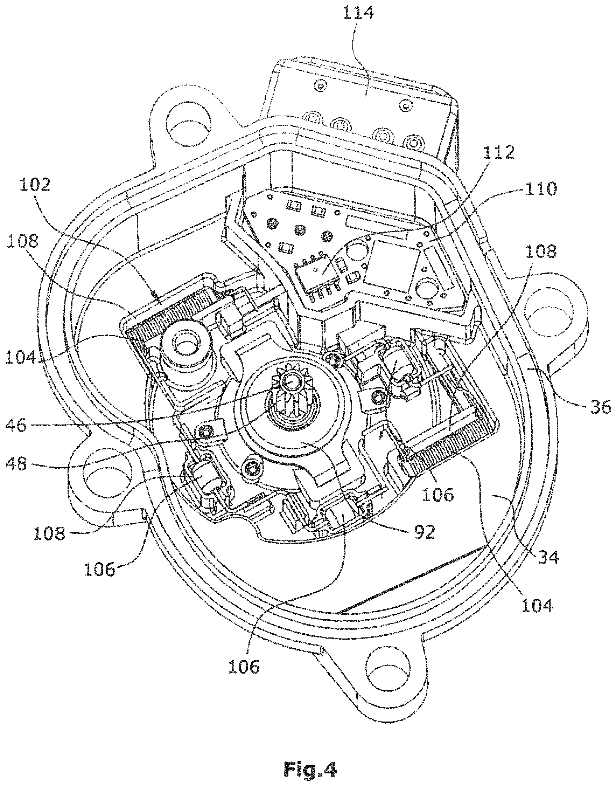

Neben diesen Funktionen als Lagerschild für das Lager 82 des Elektromotors 26 und als Bürstenbrücke 76 erfüllt der Getriebegehäusedeckel 34 zusätzlich die Funktion zur elektrischen Kontaktierung und Befestigung von Entstörmitteln 102. Diese bestehen, wie in Figur 4 zu erkennen ist, aus zwei Entstördrosseln 104 sowie drei Entstörkondensatoren 106, welche In entsprechend geformten Taschen 108 auf der zum Innern des Getriebegehäuses 30 gewandten Seite des Getriebegehäusedeckels 34 angeordnet sind. Zur elektrischen Kontaktierung sind entweder im Getriebegehäusedeckel 34 umspritzte oder daran befestigte weitere metallische Leitungen 74 in Form von Stanzblechen angeordnet.

Zusätzlich ragen diese metallischen Leitungen 74 in eine weitere an dieser Seite des Getriebegehäusedeckels 34 ausgebildeten Aufnahmetasche 108, in der eine Steuerplatine 110 angeordnet ist, auf der unter anderem die Leistungsbausteine 112 der Steuerung des Elektromotors 26 angeordnet sind. Die Steuerplatine 110 ist unmittelbar gegenüberliegend zu einem Stecker 114 angeordnet, der ebenfalls direkt am Getriebegehäusedeckel 34 ausgebildet ist. Aus diesem Stecker 114 ragen Kontaktfahnen 116, die ebenfalls als Stanzblech ausgeführt sind und sich parallel zur Antriebswelle 46 in Richtung des Elektromotors 26 aus dem Getriebegehäuse 30 erstrecken. Somit erfolgt die elektrische Kontaktierung, also das Einstecken des Steckergegenstücks von der Seite des Elektromotors 26 aus und parallel zu dessen Erstreckungsrichtung.

Durch die Verwendung des Getriebegehäusedeckels als Lagerschild, Bürstenbrücke, Aufnahme der Entstörelektronik sowie der Ansteuerplatine und des Steckers wird die Anzahl sonst notwendiger Bauteile deutlich reduziert und die Montage vereinfacht. Der benötigte Bauraum dieses Aktors ist deutlich kleiner als der bekannter Aktoren. Dennoch wird eine hohe Unempfindlichkeit gegen Vibrationen sichergestellt, so dass der Aktor eine gesteigerte Lebensdauer aufweist.

Es sollte deutlich sein, dass verschiedene Änderungen des beschriebenen Ausführungsbeispiels möglich sind, ohne den Schutzbereich des Hauptanspruchs zu verlassen. Insbesondere die Befestigung und Kontaktierung der elektrischen Bauteile lässt sich auf unterschiedliche Weise mit aufgedampften, umspritzten, eingegossenen oder formschlüssig befestigten Leitungen durchführen. Auch könnten beispielsweise die Bürstenhalter einstückig mit dem Getriebegehäusedeckel ausgeführt werden. Weitere Modifikationen oder Verwendungen für Klappenantriebe oder ähnliches sind ebenfalls denkbar.

## Patentansprüche

1. Aktor zum Antrieb einer Ventileinheit einer Verbrennungskraftmaschine mit
einem Elektromotor (26),
einem Getriebe (28), welches vom Elektromotor (26) angetrieben ist, einem Getriebegehäuse (30), in dem das Getriebe (28) angeordnet ist, wobei das Getriebegehäuse (30) ein erstes Getriebegehäuseteil (32) aufweist, aus dem ein Abtriebsglied (16) des Aktors (12) ragt,
**dadurch gekennzeichnet, dass**
das Getriebegehäuse (30) einen Getriebegehäusedeckel (34) aufweist, an dem der Elektromotor (26) befestigt ist und in dem ein Lager (82) des Elektromotors (26) axial und radial befestigt ist, wobei das Lager (82) durch ein am Getriebegehäusedeckel (34) befestigtes Klemmelement (90) axial fixiert ist, durch welches das Lager (82) axial in Richtung des Elektromotors (26) federbelastet ist, wobei eine zum geschlossenen Getriebegehäuse (30) abgewandte Seite des Getriebegehäusedeckels (34) als Bürstenbrücke (76) des Elektromotors (26) dient.

2. Aktor zum Antrieb einer Ventileinheit einer Verbrennungskraftmaschine nach Anspruch 1,
**dadurch gekennzeichnet, dass**
das Klemmelement (90) einen Ring (92) aufweist, durch den die Antriebswelle (46) des Elektromotors (26) in das Getriebegehäuse (30) ragt und von dem aus sich in Richtung des Elektromotors (26) zumindest zwei Arme (94) axial durch den Getriebegehäusedeckel (34) erstrecken.

3. Aktor zum Antrieb einer Ventileinheit einer Verbrennungskraftmaschine nach Anspruch 2,
**dadurch gekennzeichnet, dass**
die Arme (94) des Klemmelementes (90) zur axialen Fixierung des Klemmelementes (90) an der zum Elektromotor (26) weisenden Seite des Getriebegehäusedeckels (34) abgewinkelt ausgebildet sind und gegen den Getriebegehäusedeckel (34) anliegen.

4. Aktor zum Antrieb einer Ventileinheit einer Verbrennungskraftmaschine nach einem der vorhergehenden Ansprüche,
**dadurch gekennzeichnet, dass**
im Getriebegehäusedeckel (34) eine Aufnahme (84) ausgebildet ist, in der das Lager (82) angeordnet ist und deren Begrenzungswände (86, 87) das Lager (82) radial und in Richtung des Elektromotors (26) axial fixieren.

5. Aktor zum Antrieb einer Ventileinheit einer Verbrennungskraftmaschine nach einem der vorhergehenden Ansprüche,
**dadurch gekennzeichnet, dass**
an der als Bürstenbrücke (76) dienenden Seite des Getriebegehäusedeckels (34) eine Aufnahmeöffnung (40) ausgebildet ist, in der Federn (64) und Bürstenhalter (60) von Kohlebürsten (58) der Bürstenbrücke (76) befestigt sind.

6. Aktor zum Antrieb einer Ventileinheit einer Verbrennungskraftmaschine nach einem der vorhergehenden Ansprüche,
**dadurch gekennzeichnet, dass**
an der zum Innern des Getriebegehäuses (30) gewandten Seite des Getriebegehäusedeckels (34) Taschen (108) ausgebildet sind, in denen Entstörmittel (102) des Elektromotors (26) angeordnet sind.

7. Aktor zum Antrieb einer Ventileinheit einer Verbrennungskraftmaschine nach Anspruch 6,
**dadurch gekennzeichnet, dass**
im Getriebegehäusedeckel (34) metallische Leitungen (74) angeordnet sind, über die die Entstörmittel (102) miteinander und mit einer Steuerplatine (110) verbunden sind.

8. Aktor zum Antrieb einer Ventileinheit einer Verbrennungskraftmaschine nach Anspruch 7,
**dadurch gekennzeichnet, dass**
die Steuerplatine (110) im Innern des Getriebegehäuses (30) auf dem Getriebegehäusedeckel (34) befestigt ist.

9. Aktor zum Antrieb einer Ventileinheit einer Verbrennungskraftmaschine nach einem der vorhergehenden Ansprüche,
**dadurch gekennzeichnet, dass**
ein Stecker (114) zur Spannungsversorgung des Elektromotors (26) am Getriebegehäusedeckel (34) ausgebildet ist.

## Claims

1. An actuator for driving a valve unit of an internal combustion engine, comprising
an electric motor (26),
a gearing (28) which is driven by the electric motor (26) and having a gearing housing (30) in which the gearing (28) is arranged, wherein the gearing housing (30) has a first gearing housing part (32) out of which an output element (16) of the actuator (12) extends,
**characterized in that**
the gearing housing (30) has a gearing housing cover (34) to which the electric motor (26) is fastened and in which a bearing (82) of the electric motor (26) is fastened axially and radially, wherein the bearing (82) is fixed axially by a clamping element (90) fastened to the gearing housing cover (34), by which element the bearing (82) is spring-loaded axially in the direction of the electric motor (26), wherein a side of the gearing housing cover (34) averted from the closed gearing housing (30) serves as a brush plate (76) of the electric motor (26).

2. The actuator for driving a valve unit of an internal combustion engine of claim 1, **characterized in that** the clamping element (90) comprises a ring (92) through which the drive shaft (46) of the electric motor (26) extends into the gearing housing (30) and from which at least two arms (94) extend axially through the gearing housing cover (34) towards the electric motor (26).

3. The actuator for driving a valve unit of an internal combustion engine of claim 2, **characterized in that** for an axial fixation of the clamping element (90), the arms (94) of the clamping element (90) are angled at the side of the gearing housing cover (34) facing the electric motor (26) and rest on the gearing housing cover (34).

4. The actuator for driving a valve unit of an internal combustion engine of one of the preceding claims, **characterized in that** the gearing housing cover (34) is formed with a receptacle (84) in which the bearing (82) is arranged and the limiting walls (86, 87) of which fix the bearing (82) radially and, in the direction of the electric motor (26), axially.

5. The actuator for driving a valve unit of an internal combustion engine of one of the preceding claims, **characterized in that** a receiving opening (40) is formed at the side of the gearing housing cover (34) serving as a brush plate (76), in which opening springs (64) and brush holders (60) of carbon brushes (58) of the brush bridge (76) are mounted.

6. The actuator for driving a valve unit of an internal combustion engine of one of the preceding claims, **characterized in that** pockets (108) are formed at the side of the gearing housing cover (34) facing the interior of the gearing housing (30), in which pockets interference suppression means (102) of the electric motor (26) are arranged.

7. The actuator for driving a valve unit of an internal combustion engine of claim 6, **characterized in that** metal conductors (74) are arranged in the gearing housing cover (34), via which the interference suppression means (102) are connected among each other and to a control circuit board (110).

8. The actuator for driving a valve unit of an internal combustion engine of claim 7, **characterized in that** the control circuit board (110) is fastened on the inside of the gearing housing (30) on the gearing housing cover (34).

9. The actuator for driving a valve unit of an internal combustion engine of one of the preceding claims, **characterized in that** a connector (114) is formed an the gearing housing cover (34) for power supply to the electric motor (26).

## Revendications

1. Actionneur permettant d'entrainer un ensemble soupape pour moteur à combustion interne avec
un moteur électrique (26),
un engrenage (28) entrainé par le moteur électrique (26), un carter d'engrenage (30) dans lequel l'engrenage (28) est disposé, ledit carter d'engrenage (30) comportant une première partie du carter d'engrenage (32) hors de laquelle saille un élément de sortie (18) de l'actionneur (12),
**caractérisé en ce que**
le carter d'engrenage (30) comporte un couvercle (34) du carter d'engrenage sur lequel le moteur électrique (26) est monté et dans lequel un palier (82) du moteur électrique (26) est monté axialement et radialement, ledit palier (82) étant fixé axialement par un élément de serrage (90) monté sur le couvercle (34) du carter d'engrenage, par lequel élément le palier (82) est sollicité axialement vers ledit moteur électrique (26), une face du couvercle (34) du carter d'engrenage, qui est détournée du carter d'engrenage (30) fermé, servant comme plaque porte-balais (76) dudit moteur électrique (26).

2. Actionneur permettant d'entrainer un ensemble soupape pour moteur à combustion interne selon la revendication 1, **caractérisé en ce que** l'élément de serrage (90) comporte un anneau (92) à travers lequel l'arbre d'entrainement (46) du moteur électrique (26) saille dans le carter d'engrenage (30), et à partir duquel au moins deux bras (94) s'étendent axialement à travers le couvercle (34) du carter d'engrenage vers le moteur électrique (26).

3. Actionneur permettant d'entrainer un ensemble soupape pour moteur à combustion interne selon la revendication 2, **caractérisé en ce que** les bras (94) dudit élément de serrage (90) sont conçus en angle pour la fixation axiale dudit élément de serrage (90) sur la face du couvercle (34) du carter d'engrenage orientée vers le moteur électrique (26) et restent sur le couvercle (34) du carter d'engrenage.

4. Actionneur permettant d'entrainer un ensemble soupape pour moteur à combustion interne selon l'une quelconque des revendications précédentes, **caractérisé en ce qu'**un logement (84) est formé dans le couvercle (34) du carter d'engrenage, dans lequel le palier (82) est disposé et dont les parois de délimitation (86, 87) fixent le palier (82) radialement et, dans la direction du moteur électrique (26), axialement.

5. Actionneur permettant d'entrainer un ensemble soupape pour moteur à combustion interne selon l'une quelconque des revendications précédentes, **caractérisé en ce que** sur la face du couvercle (34) du carter d'engrenage servant comme plaque porte-balais (76), une ouverture de logement (40) est formée, dans laquelle des ressorts (64) et des porte-balais (50) de balais de charbon (58) de la plaque porte-balais (76) sont montés.

6. Actionneur permettant d'entrainer un ensemble soupape pour moteur à combustion interne selon l'une quelconque des revendications précédentes, **caractérisé en ce que** des poches sont formées sur la face du couvercle (34) du carter d'engrenage orientée vers l'intérieur du carter d'engrenage (30), dans lesquelles des moyens d'antiparasitage (102) du moteur électrique (26) sont disposés.

7. Actionneur permettant d'entrainer un ensemble soupape pour moteur à combustion interne selon la revendication 6, **caractérisé en ce que** des lignes (74) métalliques sont disposées dans le carter d'engrenage (30) par lesquelles les moyens d'antiparasitage (102) sont reliés entre eux et avec une platine de commande (110).

8. Actionneur permettant d'entrainer un ensemble soupape pour moteur à combustion interne selon la revendication 7, **caractérisé en ce que** la platine de commande (110) est fixée dans l'intérieur du carter d'engrenage (30) sur le couvercle (34) du carter d'engrenage.

9. Actionneur permettant d'entrainer un ensemble soupape pour moteur à combustion interne selon l'une quelconque des revendications précédentes, **caractérisé en ce qu'**un connecteur (114) est formé sur le couvercle (34) du carter d'engrenage pour l'alimentation en tension du moteur électrique (26).
